# EUROPÄISCHE PATENTSCHRIFT

(11) **EP 1 758 951 B1**
(45) Veröffentlichungstag und Bekanntmachung des Hinweises auf die Patenterteilung: **19.05.2010**
(21) Anmeldenummer: 05753572.6
(22) Anmeldetag: 09.06.2005
(51) Int. Cl.: C08J 9/00, C08J 9/20

(54) **STYROLPOLYMER-PARTIKELSCHAUMSTOFFE MIT VERRINGERTER WÄRMELEITFÄHIGKEIT**
STYRENE POLYMER PARTICLE FOAM MATERIALS HAVING A REDUCED THERMAL CONDUCTIVITY
MOUSSES PARTICULAIRES A BASE DE POLYMERES STYRENIQUES, A CONDUCTIVITE THERMIQUE REDUITE

(30) Priorität: 16.06.2004 DE 102004028768
(43) Veröffentlichungstag der Anmeldung: 07.03.2007
(73) Patentinhaber: BASF SE, 67056 Ludwigshafen (DE)
(72) Erfinder: DATKO, Achim, 69181 Leimen (DE); HAHN, Klaus, 67281 Kirchheim (DE); ALLMENDINGER, Markus, 67149 Meckenheim (DE)
(86) Internationale Anmeldenummer: PCT/EP2005/006200
(87) Internationale Veröffentlichungsnummer: WO 2005/123816

(56) Entgegenhaltungen:
- WO-A-97/45477
- WO-A-98/51735

## Beschreibung

Die Erfindung betrifft Styrolpolymer-Partikelschaumstoffe mit einer Dichte von 7 bis 20 g/l, die eine Wärmeleitfähigkeit λ, bestimmt bei 10°C nach DIN 52612, im Bereich von 27 bis 31 mW/m*K aufweisen und 0,5 bis 5 Gew.-% Graphit enthalten, sowie Verfahren zu deren Herstellung.

Polystyrolpartikelschaumstoffe sind seit langer Zeit bekannt und haben sich auf vielen Gebieten bewährt. Die Herstellung derartiger Schaumstoffe erfolgt durch Aufschäumen von mit Treibmitteln imprägnierten Polystyrolpartikeln und das nachfolgende Verschweißen der so hergestellten Schaumpartikel zu Formkörpern. Ein wesentliches Einsatzgebiet ist die Wärmedämmung im Bauwesen.

Die zur Wärmedämmung eingesetzten Schaumstoffplatten aus Polystyrolpartikelschaum haben zumeist Dichten von etwa 30 g/l, da bei diesen Dichten die Wärmeleitfähigkeit des Polystyrolpartikelschaums ein Minimum aufweist. Aus Gründen der Materialeinsparung wäre es wünschenswert, Schaumstoffplatten mit geringeren Dichten, insbesondere < 15 g/l, zur Wärmeisolation einzusetzen. Derartige Schaumstoffplatten mit geringerer Dichte weisen jedoch eine drastisch verschlechterte Wärmedämmfähigkeit auf, so dass sie die Anforderungen der Wärmeleitklasse 035 (DIN 18 164, Teil 1) nicht erfüllen.

Zur Verringerung der Wärmeleitfähigkeit von Polystyrolschaumstoffen wurden diesen auf verschiedene Art und Weise athermane Materialien wie Ruß (EP-A 372 343, EP-A 620 246), Graphit (EP-A 981 574 und EP-A 981 575) oder Aluminiumblättchen (WO 00/043442) zugegeben. Hierbei werden je nach Art und Einarbeitung hohe Mengen der athermanen Materialien benötigt, die aufgrund der nukleierenden Wirkung zu Problemen bei der homogenen Einarbeitung führen können. Des weiteren können die mechanischen Eigenschaften der daraus hergestellten Schaumstoffe und dessen Brandverhalten negativ beeinflusst werden.

Die Wärmeleitfähigkeit von Polystyrolschaumstoffen wird auch durch die Art und Menge des Zellgases beeinflusst. Aus Umweltgründen wurden halogenhaltige Treibmittel durch leichtflüchtige Treibmittel aus Kohlenwasserstoffen ersetzt. Da letztere nach dem Verschäumen der expandierbaren Polystyrole (EPS) in der Regel innerhalb kurzer Zeit aus dem Schaumstoff herausdiffundieren, steigt die direkt nach dem Verschäumen gemessene Wärmeleitfähigkeit mit der Lagerung wieder leicht an.

Aufgabe der vorliegenden Erfindung war es daher, den genannten Nachteilen abzuhelfen und Styrolpolymer-Partikelschaumstoffe mit verbesserter Wärmleitfähigkeit bereitzustellen, die gute mechanische Eigenschaften und insbesondere gute Brandschutzeigenschaften aufweisen. Des weiteren sollte ein Verfahren zur Herstellung von treibmittelhaltigen, expandierbaren Styrolpolymeren (EPS) gefunden werden, die sich zu den Styrolpolymer-Partikelschaumstoffen mit verbesserter Wärmeleitfähigkeit verschäumen und versintern lassen.

Demgemäß wurden die oben genannten Styrolpolymer-Partikelschaumstoffe gefunden.

Die Styrolpolymer-Partikelschaumstoffe weisen auch bei Dichten im Bereich von 7 bis 20 g/l, bevorzugt im Bereich von 10 bis 16 g/l, eine Wärmeleitfähigkeit λ, bestimmt bei 10°C nach DIN 52612, im Bereich von 27 bis 31, besonders bevorzugt im Bereich von 28 bis 30 mW/m*K auf.

Die Styrolpolymer-Partikelschaumstoffe weisen bevorzugt 2 bis 15 Zellen/mm auf.

In der Regel werden die niedrigen Wärmeleitfähigkeiten auch dann erreicht, wenn das Treibmittel im wesentlichen aus den Zellen diffundiert ist, d. h. die Zellen mit einem Gas gefüllt sind, das zu mindestens 90 Vol.-%, bevorzugt zu 95 bis 99 Vol.-% aus einem anorganischen Gas, insbesondere aus Luft, besteht.

Bevorzugt enthalten die Styrolpolymer-Partikelschaumstoffe eine organische Bromverbindung mit einem Bromgehalt von mindestens 70 Gew.-%. Dadurch sind selbstverlöschende Styrolpolymer-Partikelschaumstoffe erhältlich, die den Brandtest B2 nach DIN 4102 erfüllen.

Die erfindungsgemäßen Styrolpolymer-Partikelschaumstoffe sind durch Vorschäumen und Versintern der entsprechenden, expandierbaren Styrolpolymeren (EPS) erhältlich.

Unter expandierbaren Styrolpolymerisaten (EPS) werden Treibmittel enthaltende Styrolpolymerisate verstanden.

Die erfindungsgemäßen expandierbaren Styrolpolymerisate enthalten als Polymermatrix insbesondere Homopolystyrol oder Styrolcopolymerisate mit bis zu 20 Gew.-%, bezogen auf das Gewicht der Polymeren, an ethylenisch ungesättigten Comonomeren, insbesondere Alkylstyrole, Divinylbenzol, Acrylnitril oder a-Methylstyrol. Auch Blends aus Polystyrol und anderen Polymeren, insbesondere mit Kautschuk und Polyphenylenether sind möglich.

Die Styrolpolymerisate können die üblichen und bekannten Hilfsmittel und Zusatzstoffe enthalten, beispielsweise Flammschutzmittel, Keimbildner, UV-Stabilisatoren, Kettenüberträger, Treibmittel, Weichmacher, Pigmente und Antioxidantien.

Die expandierbaren Partikel werden mit den üblichen und bekannten Beschichtungsmitteln beschichtet, beispielsweise Metallstearaten, Glycerinestern und feinteiligen Silikaten.

Die EPS-Partikelgröße liegt bevorzugt im Bereich von 0,2 - 2 mm.

Die Menge der eingesetzten athermanen Partikel richtet sich nach deren Art und Wirkung. Die Styrolpolymer -Partikelschaumstoff enthalten 0,5 bis 5 Gew.-%, besonders bevorzugt 1 bis 4 Gew.-% Graphit als athermane Partikel. Bevorzugt werden als athermane Partikel Graphit mit einer mittleren Teilchengröße im Bereich von 1 bis 50 µm.

Der eingesetzte Graphit hat vorzugsweise eine mittlere Partikelgröße von 1 bis 50 µm, insbesondere von 2,5 bis 12 µm, ein Schüttgewicht von 100 bis 500 g/l und eine spezifische Oberfläche von 5 bis 20 m²/g. Es kann Naturgraphit oder gemahlener synthetischer Graphit eingesetzt werden. Die Graphitpartikel sind im Styrolpolymerisat in Mengen von 0,1 bis 5 Gew.-% enthalten.

Ein Problem bei der Verwendung von Graphitpartikeln besteht in der leichten Brennbarkeit der Graphitpartikel enthaltenden Polystyrolpartikelschaumstoffe. Um die für den Einsatz im Bauwesen notwendigen Brandtests (B1 und B2 nach DIN 4102) zu bestehen, werden in einer bevorzugten Ausführungsform der Erfindung den expandierbaren Styrolpolymerisaten Flammschutzmittel, insbesondere solche auf Basis organischer Bromverbindungen mit einem Bromgehalt von mindestens 70 Gew.-%, zugesetzt. Der Zusatz der Bromverbindung (ohne Synergist) sollte in einer Menge von mehr als 3 Gew.-%, bezogen auf das Gewicht der expandierbaren Styrolpolymerisate, erfolgen.

Überraschenderweise führt diese Menge an Flammschutzmitteln zu keinerlei Beeinträchtigung der mechanischen Kennwerte der Polystyrolpartikelschaumstoffe.

Insbesondere geeignet sind aliphatische, cycloaliphatische und aromatische Bromverbindungen, wie Hexabromcyclododecan, Pentabrommonochlorcyclohexan, Pentabromphenylallylether.

Die Wirkung der bromhaltigen Flammschutzmittel wird durch Zusatz von C-C- oder O-O-labilen organischen Verbindungen erheblich verbessert. Beispiele geeigneter Flammschutzsynergisten sind Dicumyl und Dicumylperoxid. Eine bevorzugte Kombination besteht aus 0,6 bis 5 Gew.-% organischer Bromverbindung und 0,1 bis 1,0 Gew.-% der C-C- oder O-O-labilen organischen Verbindung.

Die Herstellung der erfindungsgemäßen expandierbaren Styrolpolymerisate (EPS) kann nach unterschiedlichen Verfahren erfolgen.

Bei einer Ausführungsform vermischt man die Graphitpartikel und ein nichtionisches Tensid mit einer Schmelze des Styrolpolymerisates zu, vorzugsweise in einem Extruder. Dabei wird gleichzeitig das Treibmittel in die Schmelze zudosiert. Man kann die Graphitpartikel auch in eine Schmelze von treibmittelhaltigem Styrolpolymerisat einarbeiten, wobei zweckmäßigerweise ausgesiebte Randfraktionen eines Perlspektrums von bei einer Suspensionspolymerisation entstandenen treibmittelhaltigen Polystyrolperlen eingesetzt werden. Die Treibmittel und Graphitpartikel enthaltende Polystyrolschmelze werden ausgepresst und zu treibmittelhaltigem Granulat zerkleinert. Da die Graphitpartikel stark nukleierend wirken können, sollte nach dem Auspressen unter Druck rasch abgekühlt werden, um ein Aufschäumen zu vermeiden. Man führt daher zweckmäßigerweise eine Unterwassergranulierung unter Druck in einem geschlossenen System durch.

Es ist auch möglich, den Graphitpartikel enthaltenden Styrolpolymerisaten das Treibmittel in einem gesonderten Verfahrenschritt zuzusetzen. Hierbei werden die Granulate dann vorzugsweise in wässriger Suspension mit dem Treibmittel imprägniert.

In allen drei Fällen kann man die feinteiligen Graphitpartikel und das nichtionische Tensid direkt deiner Polystyrolschmelze zusetzen. Man kann die athermanen Partikel aber auch in Form eines Konzentrats in Polystyrol der Schmelze zusetzen. Bevorzugt werden aber Polystyrolgranulat und Graphitpartikel zusammen in einen Extruder eingegeben, das Polystyrol aufgeschmolzen und mit den athermanen Partikeln vermischt.

Es ist grundsätzlich auch möglich, die Graphitpartikel und ein nichtionisches Tensid bei der Suspensionspolymerisation zu inkorporieren, sofern sie ausreichend inert gegenüber dem in der Regel verwendeten Wasser als Suspensionsmedium sind. Sie können hierbei vor der Suspendierung dem monomeren Styrol zugesetzt oder im Verlaufe, bevorzugt während der ersten Hälfte des Polymerisationszyklus, dem Reaktionsansatz zugefügt werden. Das Treibmittel wird bevorzugt im Verlaufe der Polymerisation zugegeben, es kann jedoch auch hinterher dem Styrolpolymerisat einverleibt werden. Dabei hat es sich gezeigt, dass es für die Stabilität der Suspension günstig ist, wenn bei Beginn der Suspensionspolymerisation eine Lösung von Polystyrol (bzw. einem entsprechenden Styrolcopolymerisat) in Styrol (bzw. der Mischung von Styrol mit Comonomeren) vorliegt. Bevorzugt geht man dabei von einer 0,5 bis 30, insbesondere 5 bis 20 gew.-%igen Lösung von Polystyrol in Styrol aus. Man kann dabei frisches Polystyrol in Monomeren auflösen, zweckmäßigerweise setzt man aber sogenannte Randfraktionen ein, die bei der Auftrennung des bei der Herstellung von expandierbarem Polystyrol anfallenden Perlspektrums als zu große oder zu kleine Perlen ausgesiebt werden. In der Praxis haben derartige nicht verwertbare Randfraktionen Durchmesser von größer als 2,0 mm bzw. kleiner als 0,2 mm. Auch Polystyrol-Recyclat und Schaumpolystyrol-Recyclat können eingesetzt werden. Eine andere Möglichkeit besteht darin, dass man Styrol in Substanz bis zu einem Umsatz von 0,5 bis 70 % vorpolymerisiert und das Vorpolymerisat zusammen mit den athermanen Partikeln in der wässrigen Phase supendiert und auspolymerisiert.

Das Treibmittel wird in den üblichen Mengen von etwa 3-10 Gew.-%, bezogen auf das Gewicht des Polymeren, zugesetzt. Als Treibmittel eingesetzt werden üblicherweise aliphatische Kohlenwasserstoffe mit 3 bis 10, vorzugsweise 4 bis 6 Kohlenstoffatomen.

Besonders bevorzugt werden die expandierbaren Styrolpolymerisaten (EPS) durch Polymerisation von Styrol und gegebenenfalls copolymerisierbaren Monomeren in wässriger Suspension und Imprägnierung mit einem Treibmittel hergestellt, wobei die Polymerisation in Gegenwart von 0,1 bis 5 Gew.-% Graphitpartikeln, bezogen auf das Styrolpolymer, und einem nichtionischen Tensid durchgeführt wird.

Als nichtionisches Tensid eignen sich beispielsweise Maleinsäureanhydrid-Copolymere (MSA), z.B. aus Maleinsäureanhydrid und C₂₀₋₂₄-1-olefin, Polyisbutylen-Bernsteinsäureanhydride (PIBSA) oder deren Umsetzungsprodukte mit Hydroxy-Polyethylengylkol-Ester, Diethylaminoethanol oder Aminen, wie Tridecylamin, Octylamin oder Polyetheramin, Tetraethylenpentaamin oder Mischungen davon. Die Molekulargewichte des nichtionischen Tensids liegen bevorzugt im Bereich von 500 bis 3000 g/mol. Sie werden in der Regel in Mengen im Bereich von 0,01 bis 2 Gew.-%, bevorzugt 0,01 bis 1 Gew.-%, bezogen auf Styrolpolymer, eingesetzt.

Die expandierbaren Graphitpartikel enthaltenden Styrolpolymerisate können zu Polystyrolschaumstoffen mit Dichten von 7 - 20 g/l, bevorzugt von 10 - 15 g/l, verarbeitet werden.

Hierzu werden die expandierbaren Partikel vorgeschäumt. Dies geschieht zumeist durch Erwärmen der Partikel mit Wasserdampf in sogenannten Vorschäumern.

Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach Abkühlen können die Formteile entnommen werden.

Die aus den erfindungsgemäßen expandierbaren Styrolpolymerisaten hergestellten Schaumstoffe zeichnen sich durch eine hervorragende Wärmeisolierung aus. Dieser Effekt zeigt sich besonders deutlich bei niedrigen Dichten.

Durch die Möglichkeit, bei gleicher Wärmeleitfähigkeit die Dichte der Styrolpolymerpartikel-Schaumstoffe deutlich zu verringern, lassen sich Materialeinsparungen realisieren. Da im Vergleich mit herkömmlichen expandierbaren Styrolpolymerisaten die gleiche Wärmedämmung mit wesentlich geringeren Schüttdichten erreicht werden kann, können mit dem erfindungsgemäß hergestellten expandierbaren Polystyrolpartikeln dünnere Schaumstoffplatten eingesetzt werden, was eine Raumeinsparung ermöglicht.

Überraschenderweise lassen sich die erfindungsgemäßen expandierbaren Styrolpolymerisate völlig problemlos zu Schaumstoffen geringer Dichte verarbeiten.

Die erfindungsgemäßen Schaumstoffe können zur Wärmedämmung von Gebäuden und Gebäudeteilen, zur thermischen Isolierung von Maschinen und Haushaltsgeräten sowie als Verpackungsmaterialien verwendet werden.

Die Erfindung soll an nachstehenden Beispielen näher erläutert werden. Die genannten Teile und Prozente beziehen sich auf das Gewicht.

### Beispiele:

Einsatzstoffe:
Pulverförmiges Grafit mit einer mittleren Partikelgröße von 4 - 5 µm (Grafitwerk Kropfmühl AG, UF 2 98),
Nichtionisches Tensid: äquimolares Umsetzungsprodukt aus Maleisäureanhydrid-C₂₀₋₂₄ 1-Olefin-Copolymer (MSA) mit Tridecylamin (TDA).
Anionsches Tensid: Emulgator K30, (Natriumalkansulfonat, 1%ige Lösung in Wasser, Bayer AG)
Dicetylperoxodicarbonat (Perkadox® 24 der Akzo-Nobel)

### Beispiele 1 und 2:

In 14,20 kg Styrol wurden 156,2 g Hexabromcyclododecan (HBCD), 2,13 kg EPS-Randfraktion (Polystyrol) gelöst und 568 g pulverförmiges Grafit (4 Gew.-% bezogen auf die Styrolmenge) homogen suspendiert unter Beimischung von 80,9 g Dicumylperoxid, 14,2 g tert.-Butylperoxy-2-ethylhexanoat, 14,2 g Dicetylperoxodicarbonat und 14,2 g nichtionisches Tensid (MSA + TDA). Die organische Phase wurde in 24,681 vollentsalztes Wasser und 2,945 kg Magnesiumsulfat/Natriumpyrophosphat-Fällung in einem druckfesten 501-Rührkessel eingebracht. Das Reaktionsgemisch wurde unter Rühren innerhalb 1,5 Stunden auf 95°C erhitzt. Anschließend wurde innerhalb von 4,0 Stunden auf 130°C erhitzt, wobei 115 min nach Erreichen von 80°C 322,1g Emulgator K30 (1%ig), nach 190 min nach Erreichen von 80°C über eine Dauer von 30 min 1,06 kg Pentan und nach 225 min nach Erreichen von 80°C 156,2g Armostat 2%ig zugegeben werden. Schließlich wird 2 Stunden bei 130°C auspolymerisiert.

Die erhaltenen Perlen wurden von der wässrigen Phase abgetrennt, durch Warmluft getrocknet und auf 1,0 - 2,0 mm ausgesiebt. Mittels Wasserdampf wurden die Perlen vorgeschäumt und anschließend zu Formteilen mit Dichten zwischen 10 und 20 g/l verschweißt und bis zur Gewichtskonstanz gelagert. Die nach DIN 52612 (Poensgen-Methode) bei 10°C ermittelten Wärmeleitzahlen (WLF) sind in Tabelle1 zusammengestellt.

### Vergleichsversuche V1 und V2

Die Beispiele 1 und 2 wurden ohne Zugabe von nichtionischem Tensid wiederholt.

**Tabelle 1:**

| Beispiel | Formteildichte [g/l] | WLF [mW/m*K] |
|---|---|---|
| 1 | 15 ± 1 | 31 |
| 2 | 19 ± 1 | 30 |
| V1 | 14± 1 | 33 |
| V2 | 18 ± 1 | 33 |

## Patentansprüche

1. Styrolpolymer-Partikelschaumstoff mit einer Dichte im Bereich von 7 bis 20 g/l und einer Wärmeleitfähigkeit λ, bestimmt bei 10°C nach DIN 52612, im Bereich von 27 bis 31 mW/m*K, **dadurch gekennzeichnet, dass** er 0,5 bis 5 Gew.-% Graphit enthält.

2. Styrolpolymer-Partikelschaumstoff nach Anspruch 1, **dadurch gekennzeichnet, dass** der Styrolpolymer-Partikelschaumstoff 2 bis 15 Zellen/mm aufweist.

3. Styrolpolymer-Partikelschaumstoff nach Anspruch 1 oder 2, **dadurch gekennzeichnet, dass** die Zellen mit einem Gas gefüllt sind, das zu mindestens 90 Vol.-% aus einem anorganischen Gas besteht.

4. Styrolpolymer-Partikelschaumstoff nach einem der Ansprüche 1 bis 3, **dadurch gekennzeichnet, dass** er 1 bis 4 Gew.-% Graphit mit einer mittleren Teilchengröße im Bereich 1 bis 50 µm enthält.

5. Styrolpolymer-Partikelschaumstoff nach einem der Ansprüche 1 bis 4, **dadurch gekennzeichnet, dass** er eine organische Bromverbindung mit einem Bromgehalt von mindestens 70 Gew.-% enthält und den Brandtest B2 nach DIN 4102 erfüllt.

6. Verfahren zur Herstellung von expandierbaren Styrolpolymerisaten (EPS) durch Polymerisation von Styrol und gegebenenfalls copolymerisierbaren Monomeren in wässriger Suspension und Imprägnierung mit einem Treibmittel, **dadurch gekennzeichnet, dass** die Polymerisation in Gegenwart von 0,1 bis 5 Gew.-% Graphitpartikeln, bezogen auf das Styrolpolymer, und einem nichtionischen Tensid durchgeführt wird.

7. Verfahren zur Herstellung von expandierbaren Styrolpolymerisaten (EPS) durch Extrusion und Unterwassergranulation einer treibmittelhaltigen Styrolpolymerschmelze, **dadurch gekennzeichnet, dass** in die Styrolpolymerschmelze 0,1 bis 5 Gew.-%, bezogen auf das Styrolpolymer, Graphitpartikeln und ein nichtionischen Tensid eingemischt werden.

8. Verfahren nach Anspruch 6 oder 7, **dadurch gekennzeichnet, dass** als nichtionisches Tensid ein Maleinsäureanhydrid-Copolymer (MSA), Polyisbutylen-Säureanhydrid (PIBSA) oder deren Umsetzungsprodukte mit Hydroxy-Polyethylengylkol-Ester oder Aminen in Mengen im Bereich von 0,01 bis 2 Gew.-%, bezogen auf Styrolpolymer, eingesetzt wird.

9. Verfahren nach einem der Ansprüche 6 bis 8, **dadurch gekennzeichnet, dass** das Molekulargewicht des nichtionischen Tensids im Bereich von 500 bis 3000 g/mol liegt.

10. Expandierbares Styrolpolymer (EPS), erhältlich nach den Verfahren gemäß den Ansprüchen 6 bis 9.

## Claims

1. An expanded styrene polymer having a density in the range from 7 to 20 g/l and a thermal conductivity λ, determined at 10°C in accordance with DIN 52612, in the range from 27 to 31 mW/m*K, which comprises from 0.5 to 5% by weight of graphite.

2. The expanded styrene polymer according to claim 1, wherein the expanded styrene polymer has from 2 to 15 cells/mm.

3. The expanded styrene polymer according to claim 1 or 2, wherein the cells are filled with a gas which comprises at least 90% by volume of an inorganic gas.

4. The expanded styrene polymer according to any of claims 1 to 3 which comprises from 1 to 4% by weight of graphite having a mean particle seize in the range from 1 to 50 µm.

5. The expanded styrene polymer according to any of claims 1 to 4 which comprises an organic bromine compound having a bromine content of at least 70% by weight and passes the burning test B2 in accordance with DIN 4102.

6. A process for preparing expandable styrene polymers (EPS) by polymerization of styrene and, if appropriate, copolymerizable monomers in aqueous suspension and impregnation with a blowing agent, wherein the polymerization is carried out in the presence of from 0.1 to 5% by weight of graphite particles, based on the styrene polymer, and a nonionic surfactant.

7. A process for preparing expandable styrene polymers (EPS) by extrusion and underwater pelletization of a styrene polymer melt containing blowing agent, wherein from 0.1 to 5% by weight, based on the styrene polymer, of graphite particles and a nonionic surfactant are mixed into the styrene polymer melt.

8. The process according to claim 6 or 7, wherein the nonionic surfactant used is a maleic anhydride copolymer (MA), polyisobutylene anhydride (PIBSA) or a reaction product of one of these with hydroxypolyethylene glycol esters or amines in amounts in the range from 0.01 to 2% by weight, based on the styrene polymer.

9. The process according to any of claims 6 to 8, wherein the molecular weight of the nonionic surfactant is in the range from 500 to 3000 g/mol.

10. An expandable styrene polymer (EPS) obtainable by the processes according to claims 6 to 9.

## Revendications

1. Mousse particulaire de polymère de styrène ayant une densité dans la plage de 7 à 20 g/l et une conductivité thermique 1, déterminée à 10°C selon DIN 52612, dans la plage de 27 à 31 mW/m*K, **caractérisée en ce qu'**elle contient de 0,5 à 5 % en poids de graphite.

2. Mousse particulaire de polymère de styrène selon la revendication 1, **caractérisée en ce que** la mousse particulaire de polymère de styrène présente de 2 à 15 cellules/mm.

3. Mousse particulaire de polymère de styrène selon la revendication 1 ou 2, **caractérisée en ce que** les cellules sont remplies d'un gaz qui consiste à raison d'au moins 90 % en volume en un gaz inorganique.

4. Mousse particulaire de polymère de styrène selon l'une quelconque des revendications 1 à 3, **caractérisée en ce qu'**elle contient de 1 à 4 % en poids de graphite ayant une taille moyenne de particule dans la plage de 1 à 50 µm.

5. Mousse particulaire de polymère de styrène selon l'une quelconque des revendications 1 à 4, **caractérisée en ce qu'**elle contient un composé bromé organique ayant une teneur en brome d'au moins 70 % en poids et satisfait au test de comportement au feu B2 selon DIN 4102.

6. Procédé pour la production de polymères de styrène expansibles (EPS), par polymérisation de styrène et éventuellement de monomères copolymérisables, en suspension aqueuse, et imprégnation avec un agent d'expansion, **caractérisé en ce que** la polymérisation est effectuée en présence de 0,1 à 5 % en poids de particules de graphite, par rapport au polymère de styrène, et d'un agent tensioactif non ionique.

7. Procédé pour la production de polymères de styrène expansibles (EPS) par extrusion et granulation sous l'eau d'une masse fondue de polymère de styrène contenant un agent d'expansion, **caractérisé en ce que** dans la masse fondue de polymère de styrène sont incorporés 0,1 à 5 % en poids, par rapport au polymère de styrène, de particules de graphite et un agent tensioactif non ionique.

8. Procédé selon la revendication 6 ou 7, **caractérisé en ce que** comme agent tensioactif non ionique on utilise un copolymère d'anhydride maléique (AM), un anhydride polyisobuténylsuccinique (PIBSA) ou leurs produits de réaction avec des esters d'hydroxypolyéthylèneglycol ou des amines en quantités dans la plage de 0,01 à 2 % en poids, par rapport au polymère de styrène.

9. Procédé selon l'une quelconque des revendications 6 à 8, **caractérisé en ce que** la masse moléculaire de l'agent tensioactif se situe dans la plage de 500 à 3 000 g/mole.

10. Polymère de styrène expansible (EPS), pouvant être obtenu conformément au procédé selon les revendications 6 à 9.
